# EUROPEAN PATENT APPLICATION

(11) **EP 4 827 036 A1**
(43) Date of publication of application: **21.10.2026**
(21) Application number: 25170351.8
(22) Date of filing: 14.04.2025
(51) Int. Cl.: H04L 5/00, G01S 7/00

(54) **SCATTERER-BASED MULTI-LINK OPERATION (MLO) FOR JOINT SENSING AND COMMUNICATION (JSAC) SYSTEMS**

(71) Applicant: Vestel Elektronik Sanayi ve Ticaret A.S., 45030 Manisa (TR)
(72) Inventor: RAFIQUE, Saira, 34810 Istanbul (TR); ARSLAN, Huseyin, 34810 Istanbul (TR)
(74) Representative: Grünecker Patent- und Rechtsanwälte PartG mbB

(57) **Abstract**

Techniques and methods are described to perform resource allocation for wireless links within a first and/or second frequency band, which are non-overlapping. By transmitting a signal within the first frequency band, channel information related to a channel between a scheduling device and one or more scatterers is obtained, based on receive signals that correspond to reflections of said signal on the one or more scattterers. Based on the receive signals, each of the scatterers is classified into a scatterer type supporting one of sensing-only, communication-only, or sensing-communication-shared types. Depending on the scatterer type, resources for one or more wireless links between the scheduling device and the scatterers are allocated, with each wireless link is allocated resources within the first frequency band, the second frequency band, or both the first frequency band and the second frequency band.

## Description

The present disclosure relates generally to wireless sensing and communication, and in particular to joint sensing and communication (JSAC).

### BACKGROUND

The emergence of the fifth generation (5G) of mobile communication marked a significant change in wireless networks, shifting focus towards supporting diverse services with varying performance needs rather than solely emphasizing data rate improvements. This shift introduced services like enhanced mobile broadband (eMBB), massive machine-type communication (mMTC), and ultra-reliable low-latency communication (uRLLC) to accommodate numerous devices and critical applications. The upcoming sixth generation (6G) cellular standards aim to build upon these capabilities by enabling joint sensing and communication (JSAC), facilitating a human-centered digital society across various sectors, such as work, healthcare, education, industry, entertainment, banking, and transportation, where communication is a crucial aspect. Given the diverse applications envisioned for next-generation networks, it is evident that wireless systems may not only handle communication, but may also utilize sensing techniques to gather information about the environment and users, improving overall network performance.

The next generation of wireless communication networks is designed to support a diverse range of applications, including traffic monitoring, intelligent transportation systems, autonomous vehicles, and immersive technologies such as virtual reality (VR) and extended reality (XR). These applications may require not only ultra-high data rates, but also high-resolution and precise sensing capabilities. To meet these demands, significant research is being directed toward integrating sensing and communication functionalities into network entities, ensuring seamless support for diverse user needs.

It is noted that the term JSAC is only one of terms referencing various projects or proposals that aim at combining communication and sensing functionalities within the same infrastructure or signal design. Some other terms include but are not limited to ISAC (Integrated Sensing and Communication), JSC (Joint Sensing and Communication), Dual-functional Radar and Communication (DFRC), and Coexistent Sensing and Communication. For example, 3^{rd} Generation Partnership Project (3GPP) as well as European Telecommunications Standards Institute (ETSI) have tended to employ the term ISAC. It is noted that the terms JSAC and Integrated Sensing and Communication (ISAC) are often used interchangeably, with most standardization bodies like ETSI and 3GPP adopting the term ISAC. Academically, ISAC refers to systems, where sensing and communication functionalities are integrated, whether operating simultaneously or alternately. In the present disclosure, sensing objects and communication receivers may be distinct, making the term JSAC more appropriate. Nevertheless, the present disclosure aligns with and falls within the scope of ISAC and JSAC.

The integration of JSAC has emerged as a promising approach in the design of next-generation wireless systems, combining the dual objectives of high-performance communication and precise sensing in a seamless manner. Despite progress in JSAC made by industry and academia, leveraging the complementary strengths of sensing and communication in frequency bands along with the resource allocation remains challenging, in particular in dynamic environments.

### SUMMARY

Methods and techniques are described herein for facilitating joint sensing and communication. For that purpose, the present disclosure provides methods and techniques to allocate resources for wireless links, needed to perform reliable high-throughput communication and high-resolution sensing.

The invention is defined by the independent claims. Some exemplary implementations are provided by the dependent claims.

For example, a method for resource allocation performed by a scheduling device is provided comprising steps of: transmitting a signal within a first frequency band; obtaining channel information related to a channel between the scheduling device and one or more scatterers, based on one or more receive signals corresponding to respective one or more reflections of said signal on the one or more scatterers; classifying, based on the one or more receive signals, each of the one or more scatterers into a respective scatterer type supporting one of sensing-only, communication-only, or sensing-communication-shared types; and allocating resources for one or more wireless links between the scheduling device and the respective one or more scatterers, wherein each of the one or more wireless links is allocated resources within: the first frequency band; a second frequency band; or both the first frequency band and the second frequency band, depending on the scatterer type, wherein the first frequency band and the second frequency band are non-overlapping.

Furthermore, an apparatus for resource allocation is provided comprising: a transmitter configured to transmit a signal within a first frequency band; and processing circuitry configured to: obtain channel information related to a channel between the scheduling device and one or more scatterers, based on one or more receive signals corresponding to respective one or more reflections of said signal on the one or more scatterers; classify, based on the one or more receive signals, each of the one or more scatterers into a respective scatterer type supporting one of sensing-only, communication-only, or sensing-communication-shared types; and allocating resources for one or more wireless links between the scheduling device and the respective one or more scatterers, wherein each of the one or more wireless links is allocated resources within: the first frequency band; a second frequency band; or both the first frequency band and the second frequency band, depending on the scatterer type, wherein the first frequency band and the second frequency band are non-overlapping.

The above-mentioned circuitry may be any circuitry such as processing circuitry including one or more processors and/or other circuitry elements.

These and other features and characteristics of the presently disclosed subject matter, as well as the methods of operation and functions of the related elements of structures and the combination of parts and economies of manufacture, will become more apparent upon consideration of the following description and the appended claims with reference to the accompanying drawings, all of which form a part of this specification. It is to be expressly understood, however, that the drawings are for the purpose of illustration and description only and are not intended as a definition of the limits of the disclosed subject matter. As used in the specification and the claims, the singular form of "a", "an", and "the" include plural referents unless the context clearly dictates otherwise.

### BRIEF DESCRIPTION OF DRAWINGS

An understanding of the nature and advantages of various embodiments may be realized by reference to the following figures.
- FIG. 1: is a block diagram illustrating an exemplary communication system.
- FIG. 2a: is a block diagram illustrating an exemplary transmitting device employing the procedure for resource allocation of the present disclosure.
- FIG. 2b: is block diagram illustrating another exemplary transmitting device employing the procedure for resource allocation of the present disclosure.
- FIG. 3: is a schematic drawing illustrating transmission of a mmWave signal to probe the environment of a transmission point device TP according to the present disclosure.
- FIG. 4: is a schematic drawing illustrating the scatterer-based multi-link operation exploiting mmWave band and sub-6 GHz band according to the present disclosure.
- FIG. 5: is a flow diagram illustrating exemplary steps of a resource allocation procedure according to the present disclosure.
- FIG. 6: is a block diagram illustrating an exemplary scheduling device performing the resource allocation according to the present disclosure.
- FIG. 7: is another flow diagram illustrating exemplary steps of the resource allocation procedure according to the present disclosure.

Like reference numbers and symbols in the various figures indicate like elements, in accordance with certain example implementations.

### DETAILED DESCRIPTION

For purposes of the description hereinafter, the terms "end," "upper," "lower," "right," "left," "vertical," "horizontal," "top," "bottom," "lateral," "longitudinal," and derivatives thereof shall relate to the disclosed subject matter as it is oriented in the drawing figures. However, it is to be understood that the disclosed subject matter may assume various alternative variations and step sequences, except where expressly specified to the contrary. It is also to be understood that the specific devices and processes illustrated in the attached drawings, and described in the following specification, are simply exemplary embodiments or aspects of the disclosed subject matter. Hence, specific dimensions and other physical characteristics related to the embodiments or aspects disclosed herein are not to be considered as limiting unless otherwise indicated.

No aspect, component, element, structure, act, step, function, instruction, and/or the like used herein should be construed as critical or essential unless explicitly described as such. Also, as used herein, the articles "a" and "an" are intended to include one or more items and may be used interchangeably with "one or more" and "at least one". Furthermore, as used herein, the term "set" is intended to include one or more items (e.g., related items, unrelated items, a combination of related and unrelated items, and/or the like) and may be used interchangeably with "one or more" or "at least one". Where only one item is intended, the term "one" or similar language is used. Also, as used herein, the terms "has", "have", "having", or the like are intended to be open-ended terms. Further, the phrase "based on" is intended to mean "based at least partially on" unless explicitly stated otherwise.

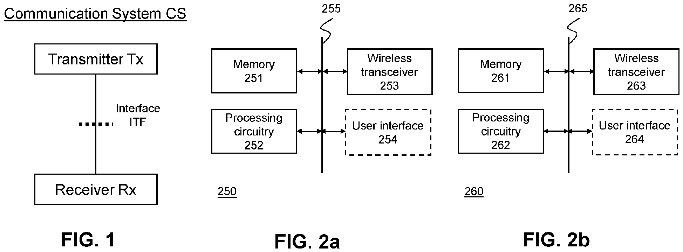

**FIG. 1** illustrates an exemplary communication system CS in which Tx represents a transmitter and Rx represents a receiver. The transmitter Tx is capable of transmitting a signal to the receiver Rx over an interface ITF. The interface may be, for instance, a wireless interface. For example, the wireless interface may be implemented by a single antenna of transmitter Tx and/or receiver Rx. Alternatively, the wireless interface may be implemented by multiple antennas of the transmitter Tx and/or receiver Tx. The interface may be specified by means of resources, which can be used for the transmission and reception by the transmitter Tx and the receiver Rx. Such resources may be defined in one or more (or all) of the time domain, frequency domain, code domain, and space domain. It is noted that in general, the "transmitter" and "receiver" may be also both integrated in the same device. In other words, the devices Tx and Rx in FIG. 1 may respectively also include the functionality of the Rx and Tx.

The present disclosure is not limited to any particular transmitter Tx, receiver Rx and/or interface ITF implementation. However, it may be applied readily to some existing communication systems as well as to the extensions of such systems, or to new communication systems. Exemplary existing communication systems may be, for instance the 5G New Radio (NR) in its current or future releases, and/or the IEEE 802.11 based systems, such as the recently studied IEEE 802.11be, and 6G technologies or the like.

The next generation of wireless communication networks is designed to support a diverse range of applications, including traffic monitoring, intelligent transportation systems, autonomous vehicles, and immersive technologies, such as virtual reality (VR) and extended reality (XR). These applications may require not only ultra-high data rates, but also high-resolution and precise sensing capabilities. To meet these demands, significant research is being directed toward integrating sensing and communication functionalities into network entities, ensuring seamless support for diverse user needs. Millimeter-wave (mmWave) frequencies offer the advantage of high data rates and high-resolution sensing, but are highly susceptible to blockages and suffer from intermittent connectivity. Conversely, sub-6 GHz frequencies provide superior coverage and diffraction capabilities, but lack the bandwidth necessary for delivering both high-resolution sensing and high-rate communication simultaneously.

To address this tradeoff, Multi-Link Operation (MLO) has emerged as a promising solution, enabling the simultaneous use of sub-6 GHz and mmWave frequency links for high-rate, high-resolution communication and sensing, while also enhancing coverage by utilizing independent links (e.g. wireless links) across lower and higher frequency bands. MLO, as highlighted by the IEEE 802.11bq PAR, supports non-standalone operation across unlicensed frequency bands between 42 GHz and 71 GHz. In this context, multi-link operation (MLO) and WLAN sensing serve as critical enablers, leveraging advanced resource allocation techniques and multi-band capabilities to significantly enhance system efficiency. Notably, frameworks, such as IEEE 802.11bf and MLO mechanisms envisioned for IEEE 802.11bq, are establishing a foundation for robust solutions to address dynamic challenges, including blockages, clutter, and multi-path propagation. Traditional wireless systems, including Wi-Fi and mmWave technologies, have primarily focused on either communication or sensing. Sub-6 GHz bands, while providing reliable long-range communication, lack the bandwidth required for high-resolution sensing. In contrast, mmWave bands offer high-precision sensing capabilities due to their narrow beamwidth and high frequency but are highly susceptible to blockages, suffer from intermittent connectivity, and a short coverage.

It was proposed to utilize the sub-6 GHz band as an early-warning mechanism for hybrid communication systems that employ both sub-6 GHz and mmWave bands. By exploiting the superior diffraction and penetration properties of sub-6 GHz signals, the system predicts impending mmWave signal blockages or transitions, enabling proactive actions, such as beam realignment, data rate adaptation, or handovers. This approach leverages the sub-6 GHz band to complement the high bandwidth and data rates provided by mmWave, ensuring robust connectivity and improved performance in dynamic and blockage-prone environments, thus addressing critical challenges in next-generation wireless networks.

In line with a similar concept as the one above, a framework was introduced, which addresses the intermittent connectivity issue of mmWave link through an integrated architecture, incorporating sub-6 GHz as a fallback mechanism. Moreover, a comprehensive integrated mmWave and sub-6 GHz framework was proposed to enable enhanced mobile broadband and ultra-reliable low latency communications by leveraging the complementary strengths of both bands enabling high-capacity, low latency, and reliable connectivity. Furthermore, the IEEE 802.11bf amendment defined sensing at sub-7 GHz and directional multi-gigabit (DMG) sensing at 60 GHz respectively, based on the use cases and requirements. However, 802.11bf primarily addressed scenarios involving a single radio link, without considering simultaneous multi-link sensing.

The above-mentioned approaches suffer from the following disadvantages and technical problems, as follows:

### 1. Early-warning mechanism for hybrid systems:

The early-warning mechanism for hybrid systems proposed the use of sub-6 GHz signals as a predictive tool to address challenges in hybrid communication systems employing both sub-6 GHz and mmWave bands. By leveraging the superior diffraction and penetration properties of sub-6 GHz frequencies, the mechanism predicted mmWave signal blockages or transitions and enabled proactive measures, such as beam realignment, data rate adaptation, or handovers to mitigate these issues. However, this approach focuses solely on blockage prediction and does not account for real-time link selection in dynamic environments. Additionally, it lacks the capability to classify scatterers (e.g., static, dynamic, or moving objects) or identify clutters in the environment, which are essential to account for robust and adaptive link management. Furthermore, the mechanism does not dynamically assign sub-6 GHz or mmWave links based on user requirements or environmental factors, such as the density of scatterers or user mobility patterns, limiting its applicability in real-world scenarios.

### 2. Integrated architecture for fallback mechanism:

The integrated architecture for fallback mechanisms introduced a framework that utilized sub-6 GHz as a fallback to address intermittent mmWave connectivity, highlighting the complementary strengths of sub-6 GHz for reliable coverage and mmWave for high-capacity data transmission in blockage-prone environments. However, this approach relies on a static allocation strategy and lacks the capability to dynamically respond to real-time environmental factors, such as scatterers and clutters. It also does not differentiate between various types of scatterers, such as human mobility, vehicles, or buildings, and their respective impacts on propagation, which are crucial for accurate link selection. Furthermore, the architecture does not account for user-specific requirements, such as high-throughput or low-latency needs, when determining whether to prioritize sub-6 GHz or mmWave links, thereby limiting its flexibility and effectiveness in dynamic environments.

### 3. Comprehensive mmWave and sub-6 GHz framework:

The integrated mmWave and sub-6 GHz wireless networks proposed an innovative framework for integrating mmWave and sub-6 GHz bands to achieve joint enhanced mobile broadband (eMBB) and ultra-reliable low-latency communication (URLLC). By leveraging protocol-level integration at the medium access control (MAC) and packet data convergence protocol (PDCP) layers, the framework enables dynamic traffic allocation, seamless fallback mechanisms, and reliable communication under blockages or mobility challenges.

While this approach effectively enhances the performance for eMBB and URLLC use cases, such as virtual reality and autonomous vehicles, it overlooks the potential for environment-aware optimizations. Specifically, leveraging physical scatterer properties (e.g., delay, angle, or type (sensing, communication, or JSAC scatterer)) is not identified as essential to guide frequency resource allocation, which could further enhance the efficiency of multi-link operations. By integrating scatterer-based sensing and classification, the system could optimize resource utilization for both sensing and communication tasks, enabling better adaptability in dynamic environments with hybrid requirements. Additionally, while the integration of mmWave and sub-6 GHz bands in this framework enhances communication reliability, it does not consider the dual use of these bands for sensing tasks, such as high-resolution detection and localization. By incorporating sensing capabilities and scatterer-driven resource allocation, the proposed system could better address hybrid requirements and improve performance in dynamic, real-world environments.

### 4. IEEE 802.11bf sensing definitions

The IEEE 802.11bf amendment defines sensing functionalities for both sub-7 GHz and directional multi-gigabit (DMG) sensing at 60 GHz, focusing on enhancing sensing capabilities within each frequency band. It outlines specific use cases and corresponding requirements tailored to the distinct characteristics of these bands, enabling improved sensing performance in terms of detection, localization, and recognition. However, the amendment primarily addresses scenarios that involve a single radio link but does not support simultaneous multi-link sensing in hybrid systems that combine sub-6 GHz and mmWave bands. This limitation restricts its ability to leverage the complementary strengths of these frequency bands for advanced applications requiring high-resolution sensing and robust coverage.

The present disclosure addresses the increasing need for high-throughput, low-latency, and precise connectivity demanded by modern applications, such as proximity ranging and sensing. By dynamically utilizing multiple frequency bands, including sub-6 GHz and higher unlicensed bands, MLO ensures reliable performance even in dense and complex environments. Furthermore, the abundant bandwidth available in these unlicensed bands provides a cost-effective solution for meeting the stringent requirements of next-generation use cases, delivering enhanced accuracy and throughput. With its ability to serve diverse industries, from residential to industrial applications, MLO represents a transformative step forward in tackling the challenges of modern wireless networks.

The present disclosure provides a method and apparatus for resource allocation for wireless links in different frequency bands in dependency of the types of scatterers present in the environment. In the following, details of the approach of the present disclosure are discussed by means of exemplary embodiments and exemplary implementations.

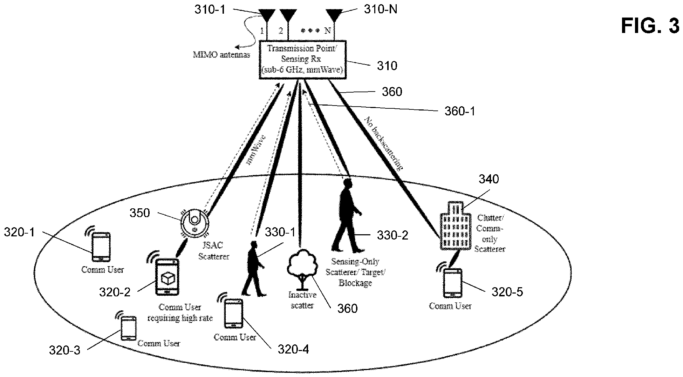

**FIG. 3** shows an exemplary system model of the present disclosure, with scheduling device 310 performing processing for resource allocation. The scheduling device may include multiple MIMO antennas 310-1 to 310-N, with N being an integer equal to or larger than 2. An environment may refer to a spatial extended region in which the scheduling device is located and may perform communication and/or sensing functions. The environment may further include various kind of scatterers, for example, multiple Comm users (CU) 320-1 to 320-5 (e.g. terminals, user equipments (UEs), stations (STAs) etc.) performing communication, JSAC scatterer 350, humans 330-1 and 330-2 (e.g. pedestrians), trees and/or bushes 360, and / or buildings 340 (e.g. personal homes, skyscrapers, etc.). Scatterers may interact with the scheduling device 310 in that they reflect, diffract, re-direct etc. signals transmitted by the scheduling device, so that communication and/or sensing functions of the scheduling device may be affected. As further detailed below, scatterers may differ, for example, in the manner if and to what extent they reflect, diffract, or re-direct signals transmitted by the scheduling device, so that a scatterer may affect the communication function differently from the sensing function. Within such scatterer environment, the allocation of resources needed for communication and/or sensing need to be optimized in account of the kind of scatterer(s) present. In the following, the term "user" is used synonymously for communication user, user equipment, terminal, station or the like. The scheduling device may be a base station (BS), an access point (AP), or a node in a higher network that includes BS(s), UE(s) etc. as nodes in such network. In the following, the scheduling device may be referred to as transmission point (TP). It is noted that the scheduling device may be also a UE.

In order to check whether scatterers are present, the TP may also have a sensing receiver Rx (Rxₛₑₙₛ) and probes its environment by transmitting a signal within a first frequency band. For example, the first frequency band may be a millimeter Wave (mmWave) band. The TP may perform the sensing functionality in a radar-like manner to probe the environment using mmWave beams, with all or some of the above-mentioned scatterers distributed within the area. Hence, since the TP uses mmWave beamforming, the sensing signal is directional. In order to detect scatterers, the TP performs beam scanning to probe the environment. The TP may classify the scatterers in the environment for optimized sensing and communication. After classification, the TP may apply adaptive beam steering for optimized sensing and communication. It is noted that CUs may also classify the scatterers in a similar manner as the TP, except that CUs employ receive signals re-directed to CUs.

The transmitted mmWave signal *x_{mmw}*(*t*) interacts with scatterers in the environment. The Rxₛₑₙₛ co-located with the TP captures (receive processing) one or more receive signals that correspond to one or more reflections of the transmitted mmWave signal on the one or more scatterers (e.g. CU 320-1 to 320-5, humans 330, building 340, and JSAC scatterer 350). The one or more receive signals may be referred to as backscattered signals. Based on the backscattered signals, the TP may obtain channel information related to a channel between the TP (e.g. scheduling device 310) and the one or more scatterers. The channel information may include one or more of amplitude, delay, Angle of Arrival, AoA, Angle of Departure, AoD, angular spread, delay spread, power characteristics, power-angle-delay profile, PADP, radar cross section, and received power of multi-paths (multi-path components). These parameters may be obtained using high-resolution parameter estimation techniques, such as multiple signal classification (MUSIC), estimation of signal parameters via rotational invariance (ESPRIT), and space-alternating generalized expectation maximization (SAGE). MUSIC estimates AoA and AoD by decomposing the received signal's covariance matrix into signal and noise subspaces. It identifies the directions, where the received signal has a maximum power by computing the peaks of a spatial spectrum function. The spatial spectrum function refers to spatial characteristics, for example, how energy or power is distributed across spatial frequencies or direction in space. Such spatial characteristics may be present in multi-antenna arrays, where antenna elements may have a different spatial location, so that an antenna element may receive the signal at a different AoA, receive power, frequency etc.. The received signal may be modeled as a sum of multipath components (MPCs), each associated with a steering vector corresponding to a unique angle. By performing an Eigenvalue decomposition (EVD) on the sample covariance matrix, MUSIC isolates the noise subspace and calculates the pseudo-spectrum, where peaks correspond to the estimated angles. MUSIC is highly accurate in high-resolution angular estimation but requires a computationally expensive grid search over possible angles.

In contrast, ESPRIT achieves an AoA/AoD estimation more efficiently by leveraging the shift-invariance property of the antenna array. Instead of performing a grid search like MUSIC, ESPRIT divides the array into two overlapping subarrays and applies a rotational transformation to extract the signal parameters. By solving an Eigenvalue equation derived from the covariance matrix of the received signal, ESPRIT directly computes the angle estimates without scanning, making it computationally more efficient than MUSIC. Additionally, ESPRIT can be extended to estimate delays and delay spread by applying a similar subspace-based approach in the time domain.

For joint estimation of multiple parameters, SAGE is employed. SAGE iteratively estimates AoA, AoD, delay, amplitude, and phase of each multipath component by maximizing the likelihood function of the received signal. In the Expectation Step (E-Step), the algorithm computes the expected signal contribution from each estimated multipath component, while in the Maximization Step (M-Step), it updates the parameter estimates to maximize the probability of observing the received signal. SAGE continues iterating until the estimates converge, producing highly accurate values for PADP, RCS, and multipath power distribution. Unlike MUSIC and ESPRIT, which focus primarily on angular estimation, SAGE provides a comprehensive multipath parameter estimation, making it particularly useful in dense multipath environments with significant scattering.

Overall, the choice of estimation technique depends on the system's computational constraints and required estimation accuracy. MUSIC provides high-resolution AoA/AoD estimation but is computationally intensive. ESPRIT offers a more efficient alternative without requiring a grid search, while SAGE excels in joint parameter estimation for complex multipath environments. These algorithms collectively enable precise scatterer classification and optimal multi-link operation in JSAC systems, ensuring robust and adaptive performance in dynamic wireless environments.

The TP may analyze any of the above parameters of the channel information. Likewise, CUs may capture multipath components (MPCs) generated by reflections of the TP's transmitted mmWave from the scatterers that facilitate (support) communication between the TP and CU(s).

Based on the backscattered signals, each of the scatterers may then be classified into a respective scatterer type that supports one of sensing-only, communication-only, or sensing-communication-shared types. These scatterer types may be understood as follows:
- Scatterers that contribute reflections to the receiver Rxₛₑₙₛ of the TP 310, but not to the communication receivers or CUs are classified as sensing-only scatterers. These scatterers include objects like humans 330, which may serve as sensing targets for gesture recognition, but do not aid in communication.
- Scatterers that produce significant multi-path components at communication receivers, but are not detected by sensing receiver Rxₛₑₙₛ of the scheduling device 310 are classified as communication-only scatterers. These scatterers typically include surfaces like walls or buildings 340 that reflect signals to maintain communication links between the TP and CU(s), such as Comm user 320-5 in **FIG. 3****.**
- Scatterers that produce detectable reflections at both the sensing receiver and communication receivers are classified as JSAC scatterers, as they support both sensing and communication functionalities.

For example, Reconfigurable Intelligent Surfaces (RISs) may be well-suited as JSAC scatterers due to their ability to dynamically manipulate electromagnetic waves, enabling both enhanced communication and passive sensing functionalities. Unlike natural scatterers, which passively reflect or scatter signals unpredictably, RISs consist of tunable meta-surfaces that control phase shifts, reflection angles, and polarization to optimize signal propagation. This makes RISs ideal for beamforming and link enhancement in non-line-of-sight (NLoS) scenarios, effectively extending coverage in mmWave and THz communication. Simultaneously, RISs can modulate the backscatter characteristics to enhance sensing, enabling high-resolution target localization, motion detection, and environmental mapping. By intelligently directing reflections, RISs may provide additional multipath components, improving Angle of Arrival (AoA), Angle of Departure (AoD), and delay estimation in sensing applications. However, their passive nature may limit their ability to generate independent sensing signals, making Doppler-based motion tracking more complex unless integrated with active elements. Moreover, real-time adaptation of RIS phase shifts for joint sensing and communication may require efficient optimization algorithms and feedback mechanisms. Despite these challenges, RISs represent a programmable and energy-efficient solution for next-generation JSAC systems, enabling adaptive, multi-functional wireless environments.

Another category of scatterers exists that typically neither produce significant backscattering for sensing nor serve communication users (CUs). These scatterers are referred to as inactive scatterers. Such scatterers 360 by be bushes, trees or the like which strongly absorb or diffusively reflect and deflect mmWave beams. However, in a dynamic environment, an inactive scatterer may transition into a communication-only scatterer, if a communication user (CU) moves closer to such scatterer(s), enabling that even a passive scatterer provides a reflective path supporting communication for the nearby CU. This is because any obstacle / object in general scatters / reflects / re-directs incoming signals (waves) and the strength (e.g. amplitude and/or power) is the reflected signal(s) decays with increasing distance from the scatterer, in addition how diffusively the signal is scattered. Therefore, a CU and/or a TP may still receive a diffuse-scattered signal, if the CU and/or the TP is close to the scatterer. Here, the term "close" refers to a spatial distance between said scatterer and the CU and/or TP that is sufficiently short such that the CU and/or TP are able to actually receive the scattered signal having a sufficiently high received signal strength indicator (RSSI). In other words, the RSSI has to be larger than a (preconfigured) threshold, so that the CU and/or TP actually detect such a scattered signal as being received.

The scatterers 320, 330, 340, and 350 are now classified in terms whether they support one of sensing-only, communication only, or sensing-communication-shared. As discussed above, the scatterers may be categorized as sensing-only, communication-only, or JSAC, based on their interaction with the signal 360 (e.g. beams generated by the scheduling device 310) transmitted within the first frequency band, such as the mmWave band, in the form of reflection, diffraction, and scattering. Scattering, reflection, and diffraction are distinct but related wave interactions. Reflection occurs on smooth surfaces with predictable angles (specular or mirror-like), diffraction enables waves to bend around obstacles, and scattering involves irregular deflection due to surface roughness (diffuse reflections). While reflection and diffraction are specific cases of wave behavior, scattering broadly includes diffuse reflections and multipath dispersion, the latter being a result of different frequencies (or wavelengths) of signal components entailed in one or more multipath components. In JSAC systems, sensing-only scatterers (e.g., humans) primarily exhibit scattering with weak reflections, making them ideal for detection but unreliable for communication. Communication-only scatterers (e.g., walls, smooth surfaces) contribute via strong reflection and diffraction, maintaining robust communication links but offering limited sensing value. JSAC scatterers (e.g., vehicles, smart surfaces) exhibit a mix of reflection, scattering, and diffraction, enabling both high-resolution sensing and reliable multipath communication, making them an important part for joint sensing-communication integration.

In the example of using the mmWave band, the classification utilizes the mmWave's high spatial resolution, narrow beamwidth, and high-frequency operation, which assists in optimizing resource allocation and system performance in complex environments. In general, the classification range of scatterers depends on the operating frequency, antenna characteristics, and propagation conditions. The classification range can be estimated using, for example, the Fraunhofer distance, angular resolution, and path loss models. For mmWave systems (e.g., 100 GHz), classification may be feasible within 1-10 meters in the near-field, 10-50 meters in mid-range, and up to 150 meters in the far-field depending on beamforming and signal processing techniques (MUSIC, ESPRIT, SAGE, etc.). Higher frequencies provide better resolution but suffer from increased path loss, limiting range. The actual range may vary based on scatterer properties, environment (indoor/outdoor), and receiver sensitivity.

In the following, further details on the scatterers and their characteristics are detailed.
- *Sensing-Only Scatterers*: These scatterers play a vital role in sensing tasks by providing reflected signals essential for environmental mapping and object detection. However, their weak diffraction properties render them unsuitable for communication, often acting as blockages in communication channels. For example, a human positioned between a transmitter and a communication user may obstruct the communication link, but their presence is critical for sensing applications like gesture recognition and motion tracking. In FIG: 3, the person 330-2 represents such blockage for communication and provides only for reflected signal 360-1. It is noted that diffraction refers to the deviation of waves from a straight-line propagation, without any change in their energy due to an obstacle or through an aperture.
- *Communication-Only Scatterers*: These scatterers support signal reflection and redirection to maintain communication links but contribute minimally to sensing tasks. From a sensing standpoint, obstacles like trees and buildings (e.g. building 340 in FIG. 3) are often considered clutter, as they create unwanted reflections. Clutter interference can be mitigated by avoiding transmission or reception in the corresponding directions. However, certain clutter sources may serve as critical scatterers for communication channels, necessitating beamforming towards these scatterers, which are categorized as communication-only scatterers. As FIG. 3 shows, the mmWave signal 360 transmitted by TP 310 hits building 340, which deflects said signal toward Comm user 320-5. Thus, buildings or the like may serve as a kind of passive relays by deflecting incoming signals toward directions where users are located. In turn, they may not provide any backscattering signals, so as to propagate back to the transmitter TP 310.
- *Shared (JSAC) Scatterers*: These scatterers support both sensing and communication functionalities by providing dual-purpose reflected signals. Examples include vehicles and moving objects in vehicular or smart city environments. In **FIG. 3****,** scatterer 350 is located between TP 310 and Comm user 320-2, which may require a high rate of data communication that could be provided by the mmWave band. Similarly, the scatterer may be a vehicle that needs to be sensed by use of the mmWave beam 360, which may not be possible with a beam within a low(er) frequency band as it constitutes wave with a too large wavelength not suitable to detect / sense objects at high spatial resolution.

Each of the one or more receive signals from a respective mmWave beam interacting with a particular scatterer may be modeled as: $r \left(t\right) = {\sum }_{i = 1}^{N} {α}_{i} {x}_{mmw} \left(t-{τ}_{i}\right) {e}^{{jφ}_{i}} + n \left(t\right) ,$ where N is a positive integer number of multipath components (MPCs) generated by the scatterer. Each MPC may correspond to a specific reflection, diffraction, or scattering interaction with the scatterer. *αᵢ* is an amplitude of the *i*-th MPC, *τᵢ* is a delay of the *i*-th MPC dependent on the path length to and from the scatterer, *φᵢ* is a phase shift introduced by the *i*-th MPC which may be influenced by the geometry and / or the material of the scatterer, *x_{mmw}*(*t*) is the transmitted signal, and *n*(*t*)*~* 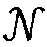 (0*, σ*²) is additive white Gaussian noise. Any of the amplitude, the delay, the AoA, the power characteristics, and the PADP are included in the channel information. The collection of these MPCs reflects the scatterer's interaction with the transmitted signal, contributing to sensing, communication, or both, based on the scatterer's properties and its role in the environment.

The transmitted mmWave signal may by given as: ${x}_{mmw} \left(t\right) = {w}_{mmw} \left(t\right) {s}_{mmw} \left(t\right) ,$ where *w_{mmw}* ∈ C^{***N***×**1**} denotes a dual-functional (sensing and communication) beamforming vector, and *s_{mmw}* ∈ C^{**1**×**1**} is a data symbol which follows a complex Gaussian distribution with zero mean and unit variance ***E***{*ss**} *=* 1. The transmit power of the Tx signal is given by $E \left\{{\left‖{x}_{mmw}\right‖}^{2}\right\} = {\left‖{x}_{mmw}\right‖}_{2}^{2} .$

Many techniques exists that allow extraction of characteristics and parameters of the MPC. For example, channel estimation techniques and algorithms, such as MUSIC, ESPRIT, or SAGE may be suitable techniques to extract channel parameters including amplitude *αᵢ*, delay *τᵢ* and, angle of arrival (AoA, *φᵢ*) for each MPC. In the following, some of the techniques are detailed.

The ESPRIT (Estimation of Signal Parameters via Rotational Invariance Techniques) algorithm is used in wireless communications to extract channel parameters, such as the angles of arrival (AoA), Angle of Departure (AoD), Time of Arrival (ToA), delay spread, angular spread, and Doppler frequencies of multipath components (MPCs). How ESPRIT works may be simplified as follows:
- **Signal Reception:** The receiver captures the signal transmitted through a multipath environment, where the signal arrives at different angles and with different delays. In the example of **FIG. 3****,** the receiver is the scheduling device 310 that transmitted the sensing mmWave signal *x_{mmw}*(*t*) in its environment with multiple scatterers present.
- **Data Collection:** The received signal is sampled, and a data matrix is formed, based on these samples. The received signal can be written as *Y* = *AW_{mmw}S_{mmw}* + *N,* where *A =* [*a*(*θ*₁)*, a*(*θ*₂)*,* ..., *a*(*θ_{L}*) ] is the steering matrix, *W_{mmw}* represents the beamforming weights, *S_{mmw}* is the transmitted data matrix, and N is the noise matrix.
- **Covariance Matrix Computation:** The covariance matrix is computed as *R = E*[*YY^{H}*] followed by the Eigenvalue decomposition (EVD) to separate signal and noise subspaces.
- **Subspace Decomposition:** ESPRIT exploits the rotational invariance property of the signal subspace to separate the signal parameters from noise. The phase shift matrix is given by $Ψ = {U}_{1}^{†} {U}_{2}$, where U₁ and U₂ are the shifted signal subspaces.
- Parameter Estimation: Next, the Eigenvalues of **Ψ** are computed to obtain AoA/AoD as ${θ}_{l} = arctan \left(\frac{Im \left({λ}_{l}\right)}{Re \left({λ}_{l}\right)}\right)$
- **Channel Characterization:** These estimated parameters help in characterizing the wireless channel, which is important for performing functional tasks like beamforming, source localization, and channel prediction.

The MUSIC (MUltiple Signal Classification) algorithm is another powerful technique used to extract channel parameters, such as angles of arrival (AoA) and Doppler frequencies, in wireless communication systems. In this technique, the received signal is processed as follows:
- **Signal Reception:** The receiver captures the signal transmitted through a multipath environment, where the signal arrives at different angles and with different delays.
- **Data Collection:** The received signal is sampled, and a data matrix is formed based on these samples.
- **Covariance Matrix Computation:** The sample covariance matrix is estimated from received data as: $R = \frac{1}{T} {\sum }_{t = 1}^{T} y \left(t\right) {y}^{H} \left(t\right)$ where T is the number of observations.
   **Subspace Decomposition:** MUSIC exploits the orthogonality between the signal subspace and the noise subspace to separate the signal parameters from noise which is given by $R = {U}_{s} {Λ}_{s} {U}_{s}^{H} + {U}_{n} {Λ}_{n} {U}_{n}^{H}$ where **U***ₛ* and **U***ₙ* are the Eigenvectors of the signal and noise subspace.
- **Parameter Estimation:** By scanning over possible angles and finding peaks in the MUSIC spectrum, the algorithm estimates the AoA and Doppler frequencies of the multipath components given by the relation ${P}_{MUSIC} \left(θ\right) = \frac{1}{{a}^{H} \left(θ\right) {U}_{n} {U}_{n}^{H} a \left(θ\right)}$ where angles *θ* represents the AoA/AoD peaks.
- **Channel Characterization:** These estimated parameters help in characterizing the wireless channel, which is important for technical tasks like beamforming, source localization, and channel prediction.

The SAGE (Space-Alternating Generalized Expectation-Maximization) algorithm is used in wireless communications for the joint estimation of channel parameters like angles of arrival (AoA) and time delays. SAGE works as follows:
- **Signal Reception:** The receiver captures the signal transmitted through a multipath environment.
- **Initialization:** The algorithm starts with an initial estimate of the channel parameters, often based on prior knowledge or rough estimates.
- **Expectation Step (E-Step):** The algorithm calculates the expected value of the complete data log-likelihood, given the observed data and current parameter estimates.
- **Maximization Step (M-Step):** The algorithm maximizes the expected log-likelihood with respect to the channel parameters, updating the estimates.
- **Iteration:** Steps 3 and 4 are repeated iteratively until convergence, i.e., until the changes in parameter estimates between iterations are below a certain threshold.

SAGE is particularly effective for complex multipath environments, and its iterative nature allows for accurate parameter estimation even with closely spaced multipath components.

The above techniques may be compared, as detailed below.

### MUSIC:

- *Complexity*: Higher due to the need for angle searching and peak picking in the MUSIC spectrum.
- *Accuracy*: Generally high, especially for large antenna arrays and high signal-to-noise ratios (SNR).
- *Speed*: Slower compared to ESPRIT due to the iterative process.
- *Use Cases*: Suitable for scenarios where high resolution is required, such as distinguishing closely spaced targets.

### ESPRIT:

- *Complexity*: Lower than MUSIC because it doesn't require angle searching.
- *Accuracy*: Lower accuracy compared to MUSIC and SAGE when the number of antennas and SNR are large.
- *Speed*: Faster than MUSIC due to the lack of iterative processes.
- *Use Cases*: Ideal for equidistant antenna arrays and scenarios where computational efficiency is crucial.

### SAGE:

- *Complexity*: Higher due to the iterative nature of the algorithm.
- *Accuracy*: Comparable to MUSIC, especially in scenarios with large antenna arrays and high SNR.
- *Speed*: Generally slower due to the iterative expectation-maximization process.
- *Use Cases*: Effective for joint estimation of azimuth and elevation angles in complex environments.

The MUSIC, ESPRIT, and SAGE algorithms each provide distinct approaches to estimating key channel parameters in sensing and communication systems, depending on the system requirements and computational constraints. In practice, MUSIC is primarily used for AoA and AoD estimation, leveraging Eigenvalue decomposition and subspace projection, and can be extended to estimate ToA and delay spread by analyzing the frequency-domain response of the covariance matrix. ESPRIT, using its shift-invariance property, provides an efficient alternative to MUSIC for estimating AoA/AoD without a spectral search and can also be adapted for ToA and delay spread estimation. SAGE, based on an iterative expectation-maximization framework, is particularly effective for joint estimation of multipath parameters, including Doppler frequency shifts, delay spread, PADP, and radar cross section (RCS), by refining estimates of amplitude, phase, delay, and frequency offsets across iterations. Each algorithm is suited for specific scenarios, i.e. MUSIC for high-resolution angular estimation, ESPRIT for computational efficiency, and SAGE for dynamic multipath environments with mobility.

In summary, MUSIC and SAGE offer high accuracy, but at the cost of higher computational complexity and slower speed, while ESPRIT provides a good balance between speed and accuracy, especially for equidistant antenna arrays.

As discussed above, the MPCs of each scatterer may be characterized in terms of the channel information extracted for the receive signals, based on which each of the scatterers may be classified into a scatterer type being one of sensing-only, communication-only, or sensing-communication-shared type. In addition or alternatively, one or more clusters may be determined, based on the scatterer type. The MPCs may be grouped into clusters, based on the angular and / or delay dispersion, where each cluster refers to a scatterer in the environment. Each of said clusters may include two or more scatterers whose channel information is similar. For example, a cluster is formed when the difference in the channel parameters between scatterers is equal to or smaller than a predefined threshold *Tₛᵢₘ*, ensuring that they exhibit similar behavior and hence consistent propagation characteristics. Scatterers are grouped into clusters based on their channel similarity, measured using a Similarity Degree (SD), which ensures that scatterers with comparable delay, angle of arrival (AoA), angle of departure (AoD), power, delay spread, angular spread, etc. The channel information is different for two or more scatterers that are included in different clusters. Clustering scatterers may improve the beamforming efficiency by directing a single optimized beam toward a group of scatterers with similar channel characteristics, reducing the need for separate beams for each scatterer. This minimizes the computational overhead, enhances signal quality, and mitigates multipath interference by avoiding redundant reflections. Further, dynamic beam steering may be enabled, allowing smooth adaptation to environmental changes without frequent realignments. Since the scatterers within a cluster have similar channel information indicative of supporting one of sensing-only, communication-only, or sensing-communication-shared, the respective cluster may also have a respective cluster type, which is one of sensing-only, communication-only, or sensing-communication-shared types. Communication clusters are typically sparse and concentrated, and have a fewer number, whereas sensing clusters are numerous, dispersed, covering a wider range of delays and angles. In other words, the spread of delays and angles for sensing clusters may be larger than the spread of delays and angles of communication clusters. In turn, clusters that are moderately spread across delay and angle represent the shared or JSAC clusters. The expression "moderately spread" means that the spreads of the delay and / or angle for JSAC clusters and scatterers may be in between the spread of the delay and / or angle of sensing-only clusters / scatterers and communication-only cluster / scatterers. Thus, JSAC clusters / scatterers may be viewed as being between sensing and communication clusters / scatterers, so that JSAC clusters / scatterers may have a dual functionality. The classification of clusters into sensing-only, communication-only, and JSAC is determined by the delay spread *σ_{τ}* and angular spread *σ_{θ}.* The delay spread is computed as the standard deviation of multipath delays, while the angular spread represents the variation in AoA/AoD across multipath components. A thresholding mechanism distinguishes the clusters. Communication-only clusters have low delay and angular spread ( ${σ}_{t} \leq {σ}_{τ}^{comm}$, σ*_{θ}* ≤ ${σ}_{θ}^{comm}$), sensing-only clusters exhibit high delay and angular spread ( ${σ}_{τ} \leq {σ}_{τ}^{sensing}$*, σ_{θ}* ≤ ${σ}_{θ}^{sensing}$), and JSAC clusters fall within an intermediate range ( ${σ}_{τ}^{comm} < {σ}_{τ} < {σ}_{τ}^{sensing} , {σ}_{θ}^{comm} <$ ${σ}_{θ} < {σ}_{θ}^{sensing}$)*.* Tηereby, ${σ}_{τ}^{comm} , {σ}_{θ}^{comm} , {σ}_{τ}^{sensing} , {σ}_{θ}^{sensing}$ refer to thresholds (i.e. thresholds having respective predefined values) for the delay and angular spread for communication and sensing, respectively. These thresholds can be empirically defined (preconfigured) based on system parameters, ensuring systematic scatterer classification for optimized sensing and communication in JSAC systems. The threshold values may be selected based on a combination of statistical analysis, empirical measurements, and system design constraints.

By treating clusters as single entities, the system may optimize resource allocation (discussed below), ensuring robust communication and efficient sensing. Since scatterers in the same cluster share the same range of resources based on their cluster type, the beam space (beamforming direction), frequency bands (sub-6 GHz or mmWave), and time (time slots for sensing or communication tasks) may be optimized for efficient multi-link operation (MLO). In a sensing-only cluster, such as a group of pedestrians detected for motion tracking, a mmWave beam may be allocated for high-resolution sensing, and dedicated time slots may be assigned for periodic updates to enhance detection accuracy. In a communication-only cluster, such as buildings acting as reflectors for an NLoS link, sub-6 GHz resources may be assigned to maintain a stable and robust communication path. In a JSAC cluster, which may include multiple moving vehicles and roadside infrastructure, spatial multiplexing may be applied, where one mmWave beam is used for position tracking (sensing), while another beam handles data transmission (communication) to nearby UEs. Such clustering of scatterers may enhance beamforming efficiency, reduce interference, and optimally distribute resources, ensuring seamless sensing and communication in dynamic environments.

With the scatterers being classified into scatterer types, each type representing a particular channel characteristics of the MPCs in terms of whether they support sensing, communication, or sensing-communication, the TP may allocate resources for one or more wireless links between the TP and the respective one or more scatterers, depending on the scatterer type. Each of the wireless links is allocated resources within the first frequency band, a second frequency band that is non-overlapping with the first frequency band, or both the first frequency band and the second frequency band. Thus, the resource allocation may be specific to the scattered type, and hence optimal for the respective function that may be performed (e.g. only sensing, only communication, or sensing and communication shared). With the resources allocated for the multiple wireless links, the scheduling device may perform a multi-link operation (MLO) by generating multiple beams in the first frequency band and/or second frequency band and performing beam formation for the respective scatterer in accordance with its scatterer type. Since the first frequency band and the second frequency band are non-overlapping, an interference between sensing and communication is avoided or minimized. For example, the second frequency band may be a sub-6 GHz band, which is about a factor of 5 different from the mmWave band, which starts at around 30 GHz and goes up to 300 GHz. Thus, there is a frequency gap of 24 GHz between the upper frequency of 6-GHz of the sub-6 GHz band and the lower frequency of 30 GHz of the mmWave band.

After the classification of scatterers into sensing-only, communication-only, and JSAC scatterers, this classification may be leveraged to strategically deploy MLO. This ensures efficient resource allocation between the second frequency band (e.g. sub-6 GHz band) and the first frequency band (e.g. mmWave band) to address the diverse requirements of users and environmental challenges, such as blockages and clutter. There are various objectives of MLO deployment, when allocating resources for the wireless links, such as:
1. **High-Resolution Sensing:** Utilize mmWave beams for sensing tasks, where a spatial precision is critical, such as detecting objects or mapping of environments.
2. **Reliable Communication:** Leverage sub-6 GHz links for robust communication in Non-Line-of-Sight (NLoS) conditions or when blockages (e.g. by buildings 340) are present.
3. **Hybrid Operation:** Combine sub-6 GHz and mmWave links for tasks requiring both high-resolution sensing and high-rate communication.

In account of the above objectives, the following strategies may be considered dependent on the scatterer type:

### i. Sensing-only Scatterers

These scatterers or clusters primarily contribute to sensing tasks, but may act as blockages for communication. As noted before, such type of scatterer type may be a human 330-2, for example.

*MLO Strategy*: In this case, mmWave links may be utilized to target sensing-only scatterers, taking advantage of their high-resolution capabilities for precise detection and mapping. These scatterers, dedicated to sensing tasks, may not significantly contribute to communication, rendering sub-6 GHz links unsuitable for this purpose. For instance, mmWave links can detect and monitor a human target, enabling applications, such as gesture recognition or detailed environmental mapping.

However, when a sensing-only scatterer blocks a communication user (e.g. see **FIG. 3** where human 330-1 blocks Comm user 320-4), both mmWave and sub-6 GHz bands are required. In this case, the human (sensing-only scatterer) acts as a blockage for the communication user, but remains a valuable sensing target. Thus, mmWave links facilitate sensing (e.g., gesture recognition of the human), while sub-6 GHz links maintain communication with the user obstructed by the human. The transmitted sub-6 GHz beam may be represented as ${x}_{s} \left(t\right) = {w}_{s} \left(t\right) {s}_{s} \left(t\right) ,$ where *wₛ* ∈ C^{***N***×**1**} denotes the dual-functional beamforming vector, and *sₛ* ∈ C^{**1**×**1**} is the data symbol which follows a complex Gaussian distribution with zero mean and unit variance ***E***{*ss**} *=* 1 for sub-6 GHz transmission. The transmit power of the Tx signal for sub-6 GHz transmitted beam is expressed as $E \left\{{\left‖{x}_{s}\right‖}^{2}\right\} = {\left‖{x}_{s}\right‖}_{2}^{2}$.

### ii. Communication-only scatterers

These scatterers or clusters facilitate reliable communication links, but may not provide significant sensing information.

*MLO Strategy*: In this case, sub-6 GHz links are assigned for communication in Non-Line-of-Sight (NLoS) conditions or scenarios with a high probability of blockages, ensuring robust connectivity even in challenging environments. On the other hand, the mmWave links may be deployed in Line-of-Sight (LoS) conditions or when high data rates are essential for performance. For example, signals can be redirected off a smooth wall, tree, or any reflector (e.g. reconfigurable intelligent surfaces RISs) to maintain a reliable communication link with a user device positioned behind an obstacle, effectively leveraging the strengths of both frequency bands for optimal operation. For example, human 330-1 is a sensing only scatterer, and hence blocks communication with Comm user 320-4 using mmWave. However, by using the sub-6 GHz band, communication with Comm user 420-4 may be maintained, while sensing human 430-1 with the mmWave band.

### iii. JSAC Scatterers

JSAC scatterers are groups of scatterers or groups of paths that serve dual purposes, simultaneously contributing to both sensing and communication tasks in wireless environments. These scatterers or clusters exhibit moderate angular and temporal spreads, enabling them to balance high-resolution sensing with robust data communication.

*MLO Strategy*: In this case, to effectively leverage JSAC scatterers or clusters, an MLO strategy is employed, where sub-6 GHz and mmWave bands are combined. The mmWave links provide high-resolution sensing data and support high-rate communication in LOS scenarios, while sub-6 GHz links ensure robust connectivity in Non-Line-of-Sight (NLoS) scenarios or when blockages occur. For example, in a vehicular network, a moving vehicle can act as a JSAC cluster by reflecting mmWave signals for real-time position tracking (sensing), while also redirecting sub-6 GHz signals to maintain communication links with user devices obscured by buildings or other obstacles. Likewise, in indoor environments, such as homes or offices, smart appliances or sliding/rotating doors may act as a JSAC scatterer, supporting both sensing and communication tasks. Appliances like a moving robotic vacuum cleaner or smart refrigerator can be tracked to monitor their operation or location within the environment. These devices often have communication modules, such as Wi-Fi or Zigbee, enabling them to act as reflective surfaces or intermediate nodes in the network. Additionally, detecting the movement of the doors can be critical for automated home systems or access control while they can also reflect signals to extend communication paths when other obstacles block direct LoS connections.

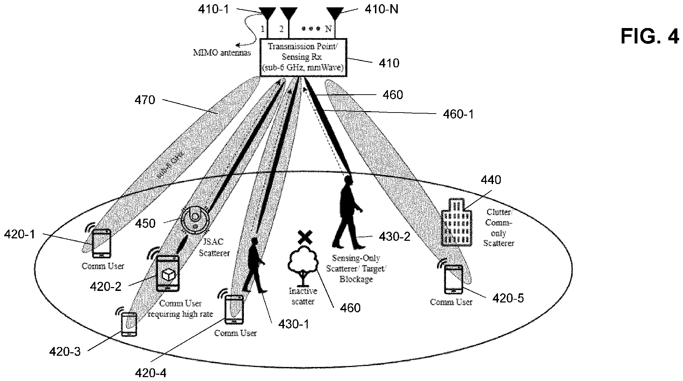

The strategic deployment of MLO in that resources are allocated dependent on a cluster type of the clusters, where both mmWave and sub-6 GHz links are leveraged, a high-resolution sensing and reliable communication may be ensured, enabling advanced applications, such as gesture control, occupancy monitoring, and seamless connectivity in dynamic indoor environments. This dynamic allocation of resources may ensure optimal system performance, addressing challenges like blockages and enabling seamless integration of sensing and communication functionalities. **FIG. 4** shows an exemplary MLO framework, for the case, where the first frequency band is the mmWave band and the second frequency band is the sub-6 GHz band. It is noted that like-reference numbers have been used, since the scheduling device 410 and its environment is similar to the one of **FIG. 3****.** For example, CUs 420-1 to 420-5 may correspond to CUs 320-1 to 320-5. As noted before, the sensing of the TP's environment may be performed using mmWave band as the first frequency band. Such mmWave band is, in particular but not only, suitable for sensing purposes, as it allows for detection of objects (i.e. presence of scatterers) at high spatial resolution. After environment sensing, the scheduling device may perform the communication-only in a lower frequency band, the sensing-only in a higher frequency band that is higher than the lower frequency band, and the second-communication-shared in the higher frequency band and the lower frequency band. The terms "lower" and "higher" mean that respective lower and higher bands are non-overlapping. For example, the lower frequency band may be the sub-6 GHz band and the higher frequency band may be the mmWave band. Thus, the lower frequency band may be the first frequency band and the higher frequency band may be the second frequency band. In the example of **FIG. 4****,** there are multiple wireless links for which TP 410 allocated resources, dependent on the scatterer type. For example, the wireless link between the TP and user 420-1 is used for communication-only, with resources allocated within the sub-6GHz band (second frequency band). Similar applies for the wireless link between the TP and user 420-5, with the building 440 present as clutter distorting the communication. The wireless link between the TP and human 430-2 has allocated resources within the mmWave band for sensing-only said human target 430-2. The wireless links between the TP and users 420-2, 420-3 and respectively, user 420-4 and human 430-1 have allocated resources for sensing-communication-shared. In this case, the joint sensing-communication links are used to sense user 420-2 and JSAC scatterer and human 430-1 and to communicate with user 420-3 and 420-4, respectively. Thus, in this exemplary scenario, the scheduling device operates multiple links to perform different functionalities simultaneously, such as sensing-only, communication-only, and sensing-communication-shared. The scheduling device may integrate sub-6 GHz and mmWave frequency bands to enable JSAC in a dynamic wireless environment, where the wireless links may alter as one or more scatterers may move, for example, from one part of the TP's environment to another part. For example, user 420-1 being a communication-only user may move toward the location of the JASC scatterer 450 that needs to be sensed. Thus, the wireless link and respective resources of moved user 420-1 need to be adapted for sensing-communication shared. A central TP (which is also a sensing receiver Rxₛₑₙₛ) may manage both frequency bands, leveraging the sub-6 GHz links for robust communication in non-line of sight (NLOS) scenarios and mmWave beams for high-resolution sensing and high-data-rate communication in line-of-sight (LOS) conditions. The MLO framework of the present disclosure may accommodate various types of scatterers:
- A robotic vacuum cleaner may serve as a JSAC scatterer, supporting both sensing and communication tasks by reflecting mmWave signals for motion tracking and sub-6 GHz signals for reliable data relaying.
- A human 330 may act as a sensing-only scatterer, reflecting mmWave beams for detection, while blocking communication paths. The sub-6 GHz links ensure connectivity by bypassing this blockage.
- The building 340 serves as a communication-only scatterer, reflecting sub-6 GHz signals to extend coverage to shadowed areas.

It is noted that, as described above, each scatterer may play a different functional role in actively supporting sensing, communication, or both, which goes beyond just detecting their presence by the mmWave sensing signal. For example, in the case of human 430-1 and Comm user 420-4 in FIG. 4, the human acts as a sensing-only scatterer because it is primarily used for gesture recognition, presence detection, or motion tracking. However, it also behaves as a blockage, meaning it does not contribute positively to communication but instead attenuates or blocks signals. On the other hand, Comm user 420-4 is a communication-only node, which means it is only receiving data without assisting in sensing functions. Here, sensing and communication occur in separate, independent roles without cooperative enhancement. In contrast, JSAC 450, Comm user 420-2, and Comm user 420-3 leverage JSAC scatterer 450 that is actively enhancing both sensing and communication simultaneously by reflecting and modifying the signal paths. The JSAC scatterer improves beamforming, multipath diversity, and environmental awareness, making it fundamentally different from the sensing-only human scatterer or the direct communication path of Comm user 420-4. Thus, while sensing and communication exist in both cases, the classification of the scatterers as described ensures that the role of the scatterer is correctly defined based on the scatterers active or passive contribution to either function, distinguishing sensing-only, communication-only, and JSAC scatterers in a structured manner.

Such a MLO deployment may optimally allocate resources, based on scatterer roles, ensuring efficient operation in spatially and / or temporally complex environments.

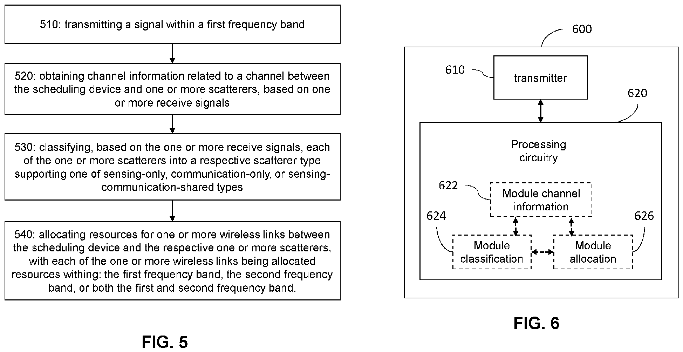

**FIG. 5** shows an exemplary flowchart for resource allocation, which may be performed by a scheduling device, such as transmission point TP 310 and / or TP 410, respectively. In order to probe the environment of the scheduling device, a signal may be transmitted in a first frequency band (step 510). As noted before, since the transmitted signal is a probe signal, it should be suitable to provide a high spatial resolution to detect scatterers within its environment from the one or more receive signals that correspond to the one or more reflections of the transmitted signal. Such a high spatial resolution may be provided by said signal being transmitted in a mmWave band being a first frequency band. In step 520, channel information that relates to a channel between the scheduling device and the scatterers may be obtained, based on the receive signals which correspond to the one or more receive signals, respectively. Each of the scatterers is then classified, based on the receive signals, into a respective scatterer type, which supports one of sensing-only, communication-only, or sensing-communication-shared types (step 530). Finally, in step 540, resources are allocated for wireless links between the scheduling device and the scatterers, based on the scatterer type. Each of the wireless links is allocated resources within the first frequency band, a second frequency band which non-overlaps with the first frequency band, or both the first frequency band and the second frequency band.

**FIG. 6** shows an exemplary block diagram of a scheduling device 600 that comprises a transmitter 610 and a processing circuitry 620. The transmitter may transmit a signal to probe an environment of the scheduling device within the first frequency band. The transmitter may also perform receiving functions for receiving one or more receive signals that correspond to reflections of the transmitted signal on the scatterers. For example, the transmitter 610 may be a transceiver performs functions of transmission and reception. The processing circuitry may perform processing of the receive signals by obtaining channel information from said receive signals. Further, the processing circuitry may classify each of the scatterers into a respective scatterer type, based on the receive signals. For example, the processing circuitry may perform any of MUSIC, ESPRIT, and / or SAGE process to extract various parameters as channel information, such as amplitude, delay, Angle of Arrival, AoA, Angle of Departure, AoD, angular spread, delay spread, power characteristics, power-angle-delay profile, PADP, radar cross section, and received power of multi-paths. Besides the parameters already discussed above, the parameters power characteristics, power-angle-delay profile, PADP, radar cross section, and received power of multi-paths may also be extracted by MUSIC, ESPRIT, or SAGE. Moreover, the processing circuitry may allocate, depending on the scatterer type, one or more wireless links between the scheduling device 600 and the one or more scatterers. In particular, each of the wireless link is allocated resources within the first frequency band, a second frequency band, or both the first frequency band and the second frequency band. The first frequency band and the second frequency band may be non-overlapping. For example, the first frequency band may be a mmWave band and the second frequency band may be a sub-6 GHZ band. The transmitter 610 may be a single RF module configured to transmit the signal in the mmWave band and another signal in the sub-6 GHz signal. Alternatively, transmitter 610 may consist of separate first and second RF modules, with the first RF module configured to transmit the signal (e.g. probe signal) in the mmWave band and the second RF module configured to transmit another signal (e.g. communication signal) in the sub-6 GHz band. Thus, the scheduling device 600 may perform beam forming processing and generating respective transmission beams for the wireless links within the respective first and second frequency bands is separate TRF modules to perform multi-link operation. Moreover, the processing circuitry may include further modules, such as a module channel information 622, module classification 624, and module allocation 626, which may be connected / linked bi-directionally to enable signaling of data (e.g. channel information, classification results). The module channel information may be configured to perform processing to obtain the channel information base on the receive signals. The receive signals may be signaled from transmitter 610 via processing circuitry 620 to the module channel information 622, which may signal the channel information to module classification 624. Subsequently, module classification may signal its classification result (e.g. scatterer types) to module allocation 626.

The resources may be allocated, based on a priority of tasks that include sensing, communication, and joint communication and sensing. The task priority may depend on conditions imposed by the environment of the scheduling device. For example, in scenarios of traffic in a city or highway or the like, where detection of vehicles is critical, sensing may have a higher priority than communication. As a result, allocation of resources for sensing has a higher priority than for allocating resources for communication. In turn, in scenarios where data transmission is crucial, possibly involving a large amount of data, resources for communication may be allocated with a higher priority than resources for sensing.

Since the environment of the scheduling device and the scatterers may change, for example, by one or more scatterers moving from one spatial region to another spatial region, conditions for sensing and / or communication may alter. This means that resources allocated for wireless links related to scatterers located in one region may no longer be optimal, when locations of scatterers change. Conditions for sensing and / or communication may also change due to weather conditions. For example, fog may affect propagation of signals in the mmWave band, while propagation may still be sufficient for signals in the sub-6 GHz band. Environmental changes may further include changing reflectivity, blockage, or other physical changes affecting multipath propagation that may be reflected in changes in any of amplitude, delay, Angle of Arrival, AoA, Angle of Departure, AoD, angular spread, delay spread, power characteristics, power-angle-delay profile, PADP, radar cross section, and received power of multi-paths. Thus, environmental changes may impact the channel characteristics (e.g. channel information) may affect the classification of the scatterers. Accordingly, environmental changes of the scatterers may be monitored and the resources may be allocated, based on the environmental changes, respectively. Monitoring in JSAC systems involves continuously tracking environmental changes that impact the wireless channel characteristics by analyzing variations in parameters, including amplitude, delay, Angle of Arrival (AoA), Angle of Departure (AoD), angular spread, delay spread, power characteristics, Power-Angle-Delay Profile (PADP), radar cross section (RCS), and received power of multipath components (MPCs). For example, in human activity recognition, a sensing-only scatterer such as a person can be monitored using Doppler shift, angular spread, and PADP variations, enabling gesture recognition and presence detection. In dynamic resource allocation, changes in multipath propagation due to a moving JSAC scatterer, such as a vehicle or smart surface, are tracked to optimize beamforming and frequency allocation. Blockage detection is another critical application, where a sudden drop in received power and alterations in multipath structure indicate an obstruction, prompting a switch to NLoS beamforming or alternate frequency bands. Additionally, in environmental awareness applications, long-term tracking of reflections from buildings and clutter allows mapping of urban dynamics by monitoring angular spread and delay variations over time. These monitoring techniques ensure adaptive sensing, real-time beamforming adjustments, and efficient spectrum utilization, optimizing overall JSAC system performance. Thus, the resources of the wireless links in the first frequency band and the second frequency band may be adapted and optimized to variations in the wireless channel.

The exemplary MLO of **FIG. 4** shows various wireless links and beams, which may be simultaneously generated by the scheduling device 401, such that functions of sensing and communication may be performed simultaneously in non-overlapping frequency bands. This means that resources are allocated for one or more wireless links in the sub-6 GHz band, so as to perform communication-only. Such wireless links are between the TP 410 and user 420-1 and the TP and user 420-5. As discussed before, building 440 is classified as communication-only scatterer, and hence deflects signals in the sub-6 GHz band into the direction of user 420-5, so as to provide a MPC between the TP and user 420-5. In turn, wireless link between the TP and human 430-2 has allocated resources for sensing-only, since the human is a blockage for communication. **FIG. 4** shows further wireless links between the TP, comm users 420-2 and 420-3, and JSAC scattere 450, and respectively between the TOP, human 430-1, and comm user 420-4. In these cases, there are wireless links for JSAC, where in the (nearly) same direction a respective wireless links exists, with the sub-6 GHz band and the mmWave band being shared. For the wireless link TP-human 430-1, the mmWave band is used for sensing and, for the wireless link TP-Comm user 420-4 the sub-6 GHZ band is used. For the wireless links related to Comm users 420-2and 420-3, JSAC scatterer 450 and the TP, there is a wireless link (i) in the sub-6 GHz band to communicate between the TP and user 420-3 and (ii) in the mmWave band to sense the JSAC scatterer and communicate with comm user 420-2 which requires a high rate of data transmission. Hence, under LOS conditions, the comm user 420-2 may use the mmWave band for high-rate communication.

Dynamic resource allocation ensures an optimal sensing and communication performance by monitoring environmental changes and task priorities. The system may dynamically adjust mmWave and sub-6 GHz links, based on task requirements, prioritizing sensing during critical detection and communication during data transmission. The output includes classified scatterers (sensing-only, communication-only, JSAC) and an optimized Multi-Link Operation (MLO) strategy, which seamlessly combines sensing and communication for robust and efficient operation.

When deploying multi-link operation, the following considerations on suitable fallback mechanisms ensuring continuous communication and sensing functionality may be taken into account. It is noted that mmWaves are primarily affected by environmental factors such as blockages or weak reflections due to their shorter wavelength than sub-6 GHz waves. Specifically, when a mmWave link becomes unreliable due to communication-only scatterers (e.g., buildings 440 or trees 460) or sensing targets acting as blockages (e.g., human 430-1), the system switches ("falls back") to sub-6 GHz links to maintain reliable communication. This allows seamless operation even in NLoS or obstruction-heavy environments. Once the blockage is removed, the system resumes mmWave operation, restoring high-rate communication. Hence, the fallback ensures adaptive switching between frequency bands based on real-time channel conditions, preventing service disruptions. Such fallback mechanisms may be as follows:

### Fallback Mechanism:

- *Communication-Only Scatterers*: When mmWave links interact with communication-only scatterers (e.g., clutter like buildings 440 or trees 460) that typically may not require high-resolution sensing, sub-6 GHz links may be utilized to ensure reliable communication. Such a scenario is depicted in **FIG. 4** by the wireless link between TP 410 and Comm user 420-5. Hence, in case of high-throughput of data is not critical, communication may be performed using sub-6 GHz links, ensuring a stable communication.
- *Sensing Target* as *Blockage*: If mmWave links are obstructed by a sensing target (e.g., a human 430-1, acting as a sensing target, but is a blockage for communication), sub-6 GHz links maintain communication, while mmWave links continue to perform high-resolution sensing. Such a scenario is depicted in **FIG. 4** by the wireless links between TP 410 and Comm user 420-4 and human 430-1.
- *Resumption of mmWave Links*: Once the blockage is resolved, mmWave links resume operation to provide high-rate communication, tailored to the user's requirements. Such a scenario is depicted in **FIG. 4** by the wireless links between TP 410 and Comm user 420-2. Hence, the communication may switch from the sub-6 GHz link(s) to the mmWave link(s) (fallback).

Hence, the above fallback mechanisms account for dynamic link switching in account of the scatterer type for reliable and robust communication and sensing, in particular, in cases of dynamically changing environments.

### Beamforming and Path Selection:

- Beamforming techniques are used to precisely target classified scatterers.
- Optimal path selection ensures the best trade-off between sensing accuracy and communication reliability.

### Resource Optimization:

- Resource allocation is dynamically adjusted based on the scatterer type and real-time environmental conditions.
- Avoid over-utilizing high-bandwidth mmWave links for tasks that can be efficiently handled by sub-6 GHz links.

Thus, the above points may be considered in the MLO by accurate beamforming and resource allocation within the first and/or second frequency band as determined by the scatterer type.

By strategically deploying MLO based on scatterer classification, JSAC systems can efficiently manage hybrid sensing and communication tasks. This ensures seamless operation in dynamic environments, enabling applications such as autonomous vehicles, smart cities, smart home, and real-time surveillance. This step leverages the strengths of sub-6 GHz and mmWave bands to overcome challenges like blockages and clutter, ensuring robust and efficient system performance.

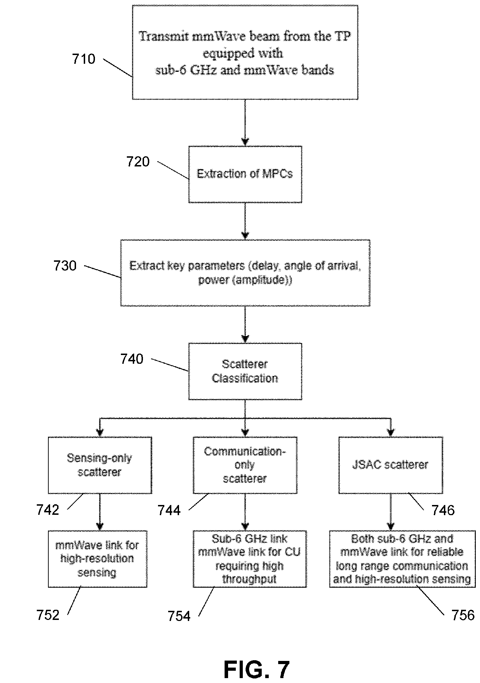

**FIG. 7** shows another exemplary flowchart for resource allocation, where the TP may be configured to transmit signals (e.g. beams) in the mmWave band (e.g. first frequency band) and the sub-6 GHz band (e.g. second frequency band). In order to know whether scatterers are present in the environment of the TP and which types they are, the TP (e.g. scheduling device 310) transmits a mmWave beam (step 710), which allows for a high spatial resolution sensing of the environment as opposed to a sub-6 GHz beam. The transmitted mmWave beam may be diffracted and reflected from one or more scatterers and, based on the receive signals corresponding to said reflections of the mmWave beam, the TP extracts multi-path component MPCs as channel information (step 720). Physically, MPCs represent one or more paths of an incoming signal being deflected and/or reflected into one or more propagation directions. Therefore, each scatterer may provide for one or more path components, which may have different channel information (e.g. channel characteristics). This is followed by extracting (or determining) key parameters, such as amplitude, delay, Angle of Arrival, AoA, Angle of Departure, AoD, angular spread, delay spread, power characteristics, power-angle-delay profile, PADP, radar cross section, and received power of multi-paths, based on the channel information (step 730). In step 740, each scatterer may be classified in terms of whether a scatterer supports sensing-only, communication-only, or sensing-communication-shared. This classification is done based on the extracted key parameters, since they are a measure if and to what extent said scatterer supports one of the above functionalities, namely sensing, communication, or both. The result of the classification in step 740 is a respective scatterer type for each scatterer, being one of a sensing-only scatterer 742, a communication-only scatterer 744, or a JSAC scatterer 746. Based on the scatterer type, resources may be allocated for one or more wireless links. For example, if a scatterer is classified as sensing-only type, a resource(s) may be allocated for the wireless link for the mmWave link to perform high-resolution sensing (step 752). In case, a scatterer is classified as communication-only type, a resource(s) may be allocated for the sub-6 GHz wireless link and / or the mmWave wireless link to perform communication (step 754). As discussed before, for communication, resources for a mmWave link may be allocated, if high-throughput of data may be needed for a Comm user CU. However, such mmWave communication may be possible in LOS conditions or in cases where the Comm user is in proximity of the region of a sensing-only scatterer that still provides mmWave reflections with sufficiently high RSSI. In case, a scatterer is classified as JSAC type, a resource(s) may be allocated both for (i) the sub-6 GHz wireless link for long-range communication and (ii) the mmWave link for high-resolution sensing (step 756).

**FIG. 2a** shows an exemplary implementation of apparatus 600 of FIG. 6 according to some exemplary embodiments, performing functions for resource allocation of the present disclosure as discussed above. **FIG. 2b** shows an exemplary implementation of an apparatus of communication user, for example, and may have the same implementation as the one of **FIG. 2a****.**

Transmitting device 250 in **FIG. 2a** may a scheduling device 600 of **FIG. 6** and / or the transmission point TP 310 of **FIG. 3** and TP 410 of **FIG. 4****,** respectively, for allocation resources for one or more wireless links within the first frequency band and / or the second frequency band.

The transmitting device 250 may be a part of any wireless communication device such as a station (STA) or access point (AP), or, in general base station (BS) or terminal (i.e. user equipment UE). The transmitting device 250 comprises memory 251, processing circuitry 252, and a wireless transceiver 253 (or a wireless transmitter 253), which may be capable of communicating with each other via a bus 255. The transmitting device 250 may further include a user interface 254. However, for some applications, the user interface 254 is not necessary (for instance some devices for machine-to-machine communications or the like). The transmitting device 250 may be the transmitter Tx of the communication system CS in **FIG. 1****.**

The memory 251 (also referred to as storage) may store a plurality of firmware or software modules, which implement some embodiments of the present disclosure. The memory may 251 be read from by the processing circuitry 252. Thereby, the processing circuitry may be configured to carry out the firmware/software implementing the embodiments. The processing circuitry 252 may include one or more processors, which, in operation, prepare data for transmission. In particular, the circuitry 252 is configured to map sequential portions of the data onto respective modulation symbols according to a target modulation. In an implementation example, the target modulation is one of phase shift keying, PSK, pulse amplitude modulation, PAM, and quadrature amplitude modulation, QAM, but may not be limited to the target modulations listed. For example, amplitude phase shift keying (ASK) or frequency shift keying (FSK) may be also used to map sequential portions of the data onto respective modulation symbols according to ASK or FSK. A further option is to combine target modulations. As such it is understood, that the above-listed target modulations also cover their respective subsets. PSK, for example, covers BPSK, DPSK, M'ary PSK, QPSK, OQPSK etc.. FSK covers BFSK, M'ary FSK, MSK, GMSK etc.. ASK covers on-off keying, M'ary ASK etc.. QAM is commonly referred to as M'ary QAM covering rectangular QAM or circular QAM. The modulation symbols include a first modulation symbol and a second modulation symbol. In a particular exemplary implementation, BPSK or QPSK are used to generate the modulation symbols. Such lower-order modulations are robust and their application for pairing modulation may provide further improvement as discussed herein.

The wireless transceiver 253 is configured to transmit a signal such as a mmWave signal to probe the environment of transmitting device 250. Likewise, the transceiver 253 is configured to transmit a signal such as a sub-6 GHz signal and or a mmWave signal to transmitting device 260 to perform long-range communication and/or high-resolution sensing. As discussed before, the transmitting device 250 may transmit a mmWave signal for high-throughput communication to transmitting device 260, for example, in case of LOS conditions. The transceiver 243 is further configured to receive one or more receive signals that correspond to one or more reflections of the mmWave signal on the one or more scatterers. The transmitting device 260 may be the receiver Rx of the communication system CS in **FIG. 1****.** Before passing the signal to an analog front including a single or multiple antennas, the transceiver may perform possibly further operations. Such further operations may include an inverse transformation such as the inverse fast Fourier transform (IFFT) or inverse discrete cosine transform (IDCT), in accordance with the desired (orthogonal or non-orthogonal) frequency division multiplex. Moreover, the transformed time-domain symbols may then be modulated onto the actual carrier, amplified or the like.

In an exemplary implementation, the transmitting operation of the transceiver 253 includes further orthogonal frequency division multiplex, OFDM, modulation of the carriers including carriers carrying the symbols of the signal. Alternatively, non-OFDM waveforms may be used for modulating the carriers that carry the respective symbols, which are transmitted using a single antenna. Alternatively, the symbols may be transmitted using multiple antennas.

As **FIG. 2a** shows, the memory 251 may be separated from the processing circuitry 252. However, this is only an example. In general, the memory 251 may be implemented within the processing circuitry 252, and e.g., within the one or more processors. The term "memory" refers to any type of long term, short term, volatile, nonvolatile, or other memory and is not to be limited to any particular type of memory or number of memories, or type of media upon which memory is stored. Thereby, the processing circuitry may be configured to carry out the firmware/software implementing the embodiments. The processing circuitry 252 may include one or more processors, which, in operation, determines data.

In some embodiments, the processing circuitry 252 performing the functions described herein may be integrated within an integrated circuit on a single chip. The processing circuitry may also implement a control function to control the transceiver 263 to receive the signal. The processing circuitry 252 may be processing circuitry 620 in **FIG. 6** and perform functions of obtaining channel information based on the receive signals, classifying the scatterers based on the receive signals, and allocating resources for wireless links within the first frequency band (e.g. mmWave band), the second frequency band (e.g. sub-6 GHz band), or both the first frequency band and the second frequency band.

The transceiver 253 is configured (e.g. by the processing circuitry) to receive a signal and obtain symbols carried therein. For example, the processing circuitry 262 may configure (control) the transceiver 263, over the bus 265, to receive the signal. The transceiver may be, for example, a wireless transceiver obeying some standard or some pre-defined rules in order to comply with the transmitter, e.g. the one described below with reference to **FIG. 2b****.** The wireless transceiver 253 may operate according some known resource multiplexing and/or multi-user multiplexing scheme. In general, any currently used scheme such as those employed in the IEEE 802.11 framework or in the 5G/6G framework are applicable. In particular, possible examples include the OFDM, OFDMA, or non-orthogonal multiple access (NOMA) or the like.

**FIG. 2b** shows an implementation of transmitting device 260, which may be the communication partner of the transmitting device 250 of **FIG. 2a****.** The transmitting device 260 comprises memory 261, processing circuitry 262, and a wireless transceiver 263 (or a wireless receiver 263), which may be capable of communicating with each other via a bus 265. The receiving device 260 may further include a user interface 265. However, for some applications, the user interface 265 is not necessary (for instance some devices for machine-to-machine communications or the like).

The memory 261 may store a plurality of firmware or software modules, which implement some embodiments of the present disclosure. The memory may 261 be read from by the processing circuitry 262. Thereby, the processing circuitry may be configured to carry out the firmware/software implementing the embodiments. The processing circuitry 262 may include one or more processors, which, in operation, determines data.

The processing circuitry 262 may perform functions, which may be integrated within an integrated circuit on a single chip. The processing circuitry may also implement a control function to control the transceiver 263 to receive the signal. For example, transceiver 263 may receive the mmWave signal by which the transmitting device 260 (e.g. comm user 320-2 in **FIG. 3****)** is sensed by the transmitting device 250 (e.g. TP 310 in **FIG. 3****).** Moreover, transceiver 263 may receive the sub-6GHz signal and/or the mmWave signal for long-range communication (e.g. comm user 420-3 in **FIG. 4****)** and/or for high-throughput communication (e.g. comm user 420-2 in **FIG. 4****)** with transmitting device 250 (e.g. TP 410 in **FIG. 4****).** The transceiver 263 is configured (e.g. by the processing circuitry) to receive a signal and obtain symbols carried therein. For example, the processing circuitry 262 may configure (control) the transceiver 263, over the bus 265, to receive the signal. The transceiver may be, for example, a wireless transceiver obeying some standard or some pre-defined rules in order to comply with the transmitter, e.g. the one described with reference to **FIG.** 2a.

The transmitting device comprises an antenna array for receiving the signal. The transceiver/receiver 263 is configured to receive the signal (e.g. the mmWave signal and / or the sub-6 GHz signal) from the scheduling device such as the transmitting device 250 of FIG. 2a. The processing circuitry 262 may include one or more processors, which is/are configured to determine the data from symbols carried by the signal. Thereby, it is assumed that sequential portions of the data are mapped onto respective modulation symbols according to a target modulation. It is noted that, since the transmitting device 260 may also perform functions of sensing, it may perform the same or similar functions as transmitting device 250 in **FIG. 2a****.**

The present disclosure may be extended to support multiple multi-link devices, whether coordinated or uncoordinated, as well as multiple coordinated single-link devices operating on mmWave and sub-6 GHz bands. Coordinated multi-link devices refer to devices that actively exchange control information and synchronize their transmissions, allowing for joint scheduling, beam management, and interference mitigation across mmWave and sub-6 GHz bands. This coordination enhances network efficiency, and resource allocation. Conversely, uncoordinated multi-link devices operate independently, without explicit synchronization or shared scheduling, leading to potential resource contention and interference. These devices rely on distributed access mechanisms, such as listen-before-talk (LBT) or adaptive interference management, to dynamically adjust their operation in shared spectrum environments. The present disclosure may be applicable to both coordinated and uncoordinated multi-link devices, as well as coordinated single-link devices. Moreover, the present disclosure may be applicable to devices supporting higher frequency bands, such as the terahertz (THz) band, alongside sub-6 GHz and/or mmWave bands. Furthermore, since the use of beamforming techniques inherently improves the security of the system, the method of the present disclosure described above may be implemented to enhance *physical layer security* to exclude an attacker from a desired link/beam. The present disclosure may be suitable for JSAC systems and for the provision of *ultra-reliable low latency communication (URLLC).*

The present disclosure discussed above jointly exploits sub-6 GHz and mmWave bands by dynamically allocating these frequency bands to optimize sensing and communication tasks, ensuring resilience and adaptability in diverse environments. The present disclosure aligns with the vision of IEEE 802.11bq, which facilitates MLO in sub-7 GHz bands and unlicensed bands between 42 GHz and 71 GHz, enabling reliable and efficient multi-band operation for future wireless systems.

The present disclosure provides a scatterer-based multi-link operation (MLO) framework to enhance the performance and efficiency of joint sensing and communication (JSAC) systems. By dynamically identifying, classifying, and allocating resources to scatterers/clusters in the environment, the system optimally balances sensing and communication tasks, even in challenging environments with blockages and clutter. Leveraging real-time sensing feedback and adaptive resource allocation, the framework ensures uninterrupted and optimal sensing and communication performance across diverse environments, making it a versatile and robust solution for future wireless systems. The present disclosure enables multi-link operation (MLO) and WLAN sensing serve, leveraging advanced resource allocation techniques and multi-band capabilities to significantly enhance system efficiency. Notably, frameworks such as IEEE 802.11bf and MLO mechanisms envisioned for IEEE 802.11bq are establishing a foundation for robust solutions to address dynamic challenges, including blockages, clutter, and multi-path propagation. The present disclosure jointly exploits different frequency bands, such as sub-6 GHz and mmWave bands, by dynamically allocating these frequency bands to optimize sensing and communication tasks, ensuring resilience and adaptability in diverse environments. The present disclosure aligns with the vision of IEEE 802.11bq, which facilitates MLO in sub-7 GHz bands and unlicensed bands between 42 GHz and 71 GHz, enabling reliable and efficient multi-band operation for future wireless systems.

The methods and apparatuses provided by the present disclosure may be used in JSAC systems, leveraging scatterer-based exploitation of MLO for 6G wireless networks. The present disclosure dynamically identifies and classifies scatterers into sensing-only, communication-only, and JSAC categories, enabling optimized resource allocation. This allows precise sensing and robust communication, particularly in environments with blockages, clutter, or multipath propagation.

The following applications can benefit from the present disclosure:
**Smart Homes and Buildings:** Dynamically utilizing scatterers like humans (sensing-only) and smart devices (JSAC scatterers) to enable gesture recognition, occupancy detection, and reliable connectivity.

**Vehicular Networks:** Exploiting scatterers such as vehicles (JSAC) and roadside infrastructure (communication-only) to enable V2X communication and real-time traffic sensing.

**Industrial Automation:** Utilizing moving machinery or robots as JSAC scatterers for precise localization and low-latency machine-to-machine communication (M2M).

**Wireless Local Area Networks (WLANs):** Enhancing IEEE 802.11 standards (e.g., 802.11bf, 802.11bq, 802.11bn, 802.11az, 802.11ay) to support high-resolution sensing and high-throughput communication needs.

The scatterer-based exploitation of MLO of the present disclosure for JSAC aligns seamlessly with emerging wireless standards, such as 3GPP and ETSI industry specification groups, including ISAC and mWT. It addresses the growing importance of sensing and localization in applications like autonomous vehicles, augmented and virtual reality (AR/VR), indoor positioning, and autonomous robotics. By uniquely leveraging scatterer-based MLO, the present disclosure optimizes JSAC systems to meet the dual demands of high-resolution sensing and robust communication. Its versatile applications span industries such as smart homes, vehicular networks, disaster management, and healthcare, while adhering to the requirements of advanced wireless standards and emerging use cases.

It is recalled that the terms Joint Sensing and Communication (JSAC) and Integrated Sensing and Communication (ISAC) are often used interchangeably, with most standardization bodies like ETSI and 3GPP adopting the term ISAC. Academically, ISAC refers to systems, where sensing and communication functionalities are integrated, whether operating simultaneously or alternately. As discussed above, in the present disclosure, sensing objects and communication receivers may be distinct, making the term JSAC more appropriate. Nevertheless, the present disclosure aligns with and falls within the scope of ISAC discussions in standardization efforts by industry specification groups.

In summary, the present disclosure provides for techniques and methods to perform resource allocation for wireless links within a first and/or second frequency band, which are non-overlapping. By transmitting a signal within the first frequency band, channel information related to a channel between a scheduling device and one or more scatterers is obtained, based on receive signals that correspond to reflections of said signal on the one or more scattterers. Based on the receive signals, each of the scatterers is classified into a scatterer type supporting one of sensing-only, communication-only, or sensing-communication-shared types. Depending on the scatterer type, resources for one or more wireless links between the scheduling device and the scatterers are allocated, with each wireless link is allocated resources within the first frequency band, the second frequency band, or both the first frequency band and the second frequency band.

### Implementations in software and hardware

It is noted that although embodiments and examples of the present disclosure were provided in terms of an apparatus above, the corresponding method provides the functionality described by the apparatus are also provided. Moreover, it is noted that any of the steps described above may be included as code instructions in a program, which may be executed by one or more processors.

The methodologies described herein may be implemented by various means depending upon the application. For example, these methodologies may be implemented in hardware, operation system, firmware, software, or any combination of two or all of them. For a hardware implementation, any processing circuitry may be used, which may include one or more processors. For example, the hardware may include one or more of application specific integrated circuits (ASICs), digital signal processors (DSPs), digital signal processing devices (DSPDs), programmable logic devices (PLDs), field programmable gate arrays (FPGAs), processors, controllers, any electronic devices, or other electronic circuitry units or elements designed to perform the functions described above.

If implemented as program code, the functions performed by the control device 300 may be stored as one or more instructions or code on a non-transitory computer readable storage medium. The computer-readable media includes physical computer storage media, which may be any available medium that can be accessed by the computer, or, in general by the processing circuitry 320. Such computer-readable media may comprise RAM, ROM, EEPROM, optical disk storage, magnetic disk storage, semiconductor storage, or other storage devices. Some particular and non-limiting examples include compact disc (CD), CD-ROM, laser disc, optical disc, digital versatile disc (DVD), Blu-ray (BD) disc or the like. Combinations of different storage media are also possible - in other words, distributed and heterogeneous storage may be employed.

For example, the program code may cause the processing circuitry 261 (e.g. including one or more processors) to operate as a special purpose computer programmed to perform the techniques disclosed herein.

The embodiments and exemplary implementations mentioned above show some non-limiting examples. It is understood that various modifications may be made without departing from the claimed subject matter. For example, modifications may be made to adapt the examples to new systems and scenarios without departing from the central concept described herein. In particular, the above embodiments and exemplary implementations are multiple-input multiple-output (MIMO) compatible and can be applied to all MCSs.

### Selected embodiments and examples

According to an aspect, a method is provided for resource allocation performed by a scheduling device comprising steps of: transmitting a signal within a first frequency band; obtaining channel information related to a channel between the scheduling device and one or more scatterers, based on one or more receive signals corresponding to respective one or more reflections of said signal on the one or more scatterers; classifying, based on the one or more receive signals, each of the one or more scatterers into a respective scatterer type supporting one of sensing-only, communication-only, or sensing-communication-shared types; and allocating resources for one or more wireless links between the scheduling device and the respective one or more scatterers, wherein each of the one or more wireless links is allocated resources within: the first frequency band; a second frequency band; or both the first frequency band and the second frequency band, depending on the scatterer type, wherein the first frequency band and the second frequency band are non-overlapping.

In an exemplary implementation, the communication-only is performed in a lower frequency band, the sensing-only is performed in a higher frequency band being higher than the lower frequency band, and the sensing-communication-shared is performed in the higher frequency band and the lower frequency band shared.

For example, the first frequency band is a millimeter wave band and the second frequency band is a sub-6 Gigahertz band.

According to an exemplary implementation, the channel information includes one or more of amplitude, delay, Angle of Arrival, AoA, Angle of Departure, AoD, angular spread, delay spread, power characteristics, power-angle-delay profile, PADP, radar cross section, and received power of multi-paths.

In another example, the resources are allocated based on a priority of tasks including sensing, communication, and joint communication and sensing.

In a further exemplary implementation, the method comprises: monitoring environmental changes of the one or more scatterers; and allocating the resources based on the environmental changes.

According to an exemplary implementation, the method comprises: determining, based on the scatterer type, one or more clusters each including two or more scatterers having a similar channel information, wherein the channel information is different for the two or more scatterers included in different clusters; and allocating the resources dependent on a cluster type of the clusters, wherein the cluster type is one of sensing-only, communication-only, or sensing-communication-shared types.

According to an implementation example, each of the one or more receive signals refers to a receive signal *r*(*t*) represented by: $r \left(t\right) = {\sum }_{i = 1}^{N} {α}_{i} {x}_{mmw} \left(t-{τ}_{i}\right) {e}^{{jφ}_{i}} + n \left(t\right)$*,* where *N* is a positive integer number of multipath components, MPCs, generated by a scatterer; *αᵢ* is an amplitude of the i-th MPC; *τᵢ* is a delay of the *i*-th MPC; *φᵢ* is the phase shift introduced by the *i*-th MPC; *x_{mmw}*(*t*) is the transmitted signal; and *n*(*t*)*~* 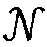 (0, *σ*²) is additive white Gaussian noise, wherein any of the amplitude, the delay, the AoA, the power characteristics, and the PADP are included in the channel information.

According to an aspect, an apparatus is provided for resource allocation comprising: a transmitter configured to transmit a signal within a first frequency band; and processing circuitry configured to: obtain channel information related to a channel between the scheduling device and one or more scatterers, based on one or more receive signals corresponding to respective one or more reflections of said signal on the one or more scatterers; classify, based on the one or more receive signals, each of the one or more scatterers into a respective scatterer type supporting one of sensing-only, communication-only, or sensing-communication-shared types; and allocating resources for one or more wireless links between the scheduling device and the respective one or more scatterers, wherein each of the one or more wireless links is allocated resources within: the first frequency band; a second frequency band; or both the first frequency band and the second frequency band, depending on the scatterer type, wherein the first frequency band and the second frequency band are non-overlapping.

The examples and exemplary implementations described above for the method apply in the same manner to the apparatus for resource allocation. In particular, the processing circuitry may be further configured to perform the steps of one or more of the above-described embodiments, examples, and exemplary implementations.

Still further, a computer program is provided, stored on a non-transitory and computer-readable medium, wherein the computer program includes instructions which when executed on one or more processors perform the steps of the method.

The present disclosure may provide for the following advantages as listed below:
**1. Seamless Integration of Sensing and Communication:** The present disclosure may enable simultaneous support for high-resolution sensing and robust communication, addressing the dual demands of next-generation networks.
**2. Dynamic Resource Optimization:** By adapting MLO strategies based on environmental changes and task priorities, the system may ensure efficient use of mmWave and sub-6 GHz links.
**3. Enhanced System Reliability:** The dual-band approach may leverage sub-6 GHz links for robustness in NLoS scenarios and mmWave links for high-resolution sensing and high-data-rate communication.
**4. Support for Diverse Scatterer Roles:** The framework of the present disclosure accommodates sensing-only, communication-only, and JSAC scatterers, which may ensure flexibility in a wide range of applications.
**5. Improved Performance in Dynamic Environments:** The MLO framework based on classified scatterers may enable handling of blockages, clutter, and mobility, so that optimal operation may be maintained even in challenging and complex scenarios.
**6. Scalability for Advanced Applications:** The present disclosure may support a variety of use cases, such as gesture recognition, object detection, environmental mapping, and reliable communication in smart homes, vehicular networks, and industrial environments.
**7. Energy and Resource Efficiency:** By targeting specific scatterer types with appropriate frequency bands, the classified scatterer-based MLO framework may avoid unnecessary resource usage, improving overall efficiency.
**8. Future-Proof Design:** The present disclosure aligns with emerging standards like IEEE 802.11bf, IEEE 802.11bq and multi-band systems, making it a robust solution for next-generation wireless networks.

According to some embodiments, the processing circuitry and/or the transceiver is embedded in an integrated circuit, IC.

Although the disclosed subject matter has been described in detail for the purpose of illustration based on what is currently considered to be the most practical and preferred embodiments, it is to be understood that such detail is solely for that purpose and that the disclosed subject matter is not limited to the disclosed embodiments, but, on the contrary, is intended to cover modifications and equivalent arrangements that are within the spirit and scope of the appended claims. For example, it is to be understood that the presently disclosed subject matter contemplates that, to the extent possible, one or more features of any embodiment can be combined with one or more features of any other embodiment.

## Claims

1. A method for resource allocation performed by a scheduling device comprising steps of:
transmitting a signal within a first frequency band;
obtaining channel information related to a channel between the scheduling device and one or more scatterers, based on one or more receive signals corresponding to respective one or more reflections of said signal on the one or more scatterers;
classifying, based on the one or more receive signals, each of the one or more scatterers into a respective scatterer type supporting one of sensing-only, communication-only, or
sensing-communication-shared types; and
allocating resources for one or more wireless links between the scheduling device and the respective one or more scatterers, wherein each of the one or more wireless links is allocated resources within:
- the first frequency band;
- a second frequency band; or
- both the first frequency band and the second frequency band,
depending on the scatterer type,
wherein the first frequency band and the second frequency band are non-overlapping.

2. The method according to claim 1, wherein
- the communication-only is performed in a lower frequency band,
- the sensing-only is performed in a higher frequency band being higher than the lower frequency band, and
- the sensing-communication-shared is performed in the higher frequency band and the lower frequency band shared.

3. The method according to claim 1 or 2, wherein the first frequency band is a millimeter wave band and the second frequency band is a sub-6 Gigahertz band.

4. The method according to any of claims 1 to 3, wherein
the channel information includes one or more of amplitude, delay, Angle of Arrival, AoA, Angle of Departure, AoD, angular spread, delay spread, power characteristics, power-angle-delay profile, PADP, radar cross section, and received power of multi-paths.

5. The method according to any of claims 1 to 4, wherein the resources are allocated based on a priority of tasks including sensing, communication, and joint communication and sensing.

6. The method according to any of claims 1 to 5, wherein the method comprises:
monitoring environmental changes of the one or more scatterers; and
allocating the resources based on the environmental changes.

7. The method according to any of claims 1 to 6, wherein the method comprises:
determining, based on the scatterer type, one or more clusters each including two or more scatterers having a similar channel information,
wherein the channel information is different for the two or more scatterers included in different clusters; and
allocating the resources dependent on a cluster type of the clusters, wherein the cluster type is one of sensing-only, communication-only, or sensing-communication-shared types.

8. The method according to any of claims 1 to 7 wherein each of the one or more receive signals refers to a receive signal *r*(*t*) represented by: $r \left(t\right) = {\sum }_{i = 1}^{N} {α}_{i} {x}_{mmw} \left(t-{τ}_{i}\right) {e}^{{jφ}_{i}} + n \left(t\right) ,$
where
*N* is a positive integer number of multipath components, MPCs, generated by a scatterer; *αᵢ* is an amplitude of the *i*-th MPC;
*τᵢ* is a delay of the *i*-th MPC;
*φᵢ* is the phase shift introduced by the *i*-th MPC;
*x_{mmw}*(*t*) is the transmitted signal; and
*n*(*t*)~ 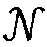 (0*, σ*²) is additive white Gaussian noise,
wherein any of the amplitude, the delay, the AoA, the power characteristics, and the PADP are included in the channel information.

9. A computer program stored on a non-transitory and computer readable medium, wherein the computer program includes instructions which when executed on one or more processors perform the method according to any of claims 1 to 8.

10. An apparatus for resource allocation comprising:
a transmitter configured to transmit a signal within a first frequency band; and
processing circuitry configured to:
- obtain channel information related to a channel between the scheduling device and one or more scatterers, based on one or more receive signals corresponding to respective one or more reflections of said signal on the one or more scatterers;
- classify, based on the one or more receive signals, each of the one or more scatterers into a respective scatterer type supporting one of sensing-only, communication-only, or sensing-communication-shared types; and
- allocating resources for one or more wireless links between the scheduling device and the respective one or more scatterers,
wherein each of the one or more wireless links is allocated resources within:
• the first frequency band;
• a second frequency band; or
• both the first frequency band and the second frequency band,
depending on the scatterer type,
wherein the first frequency band and the second frequency band are non-overlapping.

11. The apparatus according to claim 10, wherein
- the communication-only is performed in a lower frequency band,
- the sensing-only is performed in a higher frequency band being higher than the lower frequency band, and
- the sensing-communication-shared is performed in the higher frequency band and the lower frequency band shared.

12. The apparatus according to claim 10 or 11, wherein the first frequency band is a millimeter wave band and the second frequency band is a sub-6 Gigahertz band.

13. The apparatus according to any of claims 10 to 12, wherein
the channel information includes one or more of amplitude, delay, Angle of Arrival, AoA, Angle of Departure, AoD, angular spread, delay spread, power characteristics, power-angle-delay profile, PADP, radar cross section, and received power of multi-paths.

14. The apparatus according to any of claims 10 to 13, wherein the resources are allocated based on a priority of tasks including sensing, communication, and joint communication and sensing.

15. The apparatus according to any of claims 10 to 14, wherein the processing circuitry is further configured to:
monitor environmental changes of the one or more scatterers; and
allocate the resources based on the environmental changes.
